# EUROPÄISCHE PATENTANMELDUNG

(11) **EP 0 993 927 A1**
(43) Veröffentlichungstag der Anmeldung: **19.04.2000**
(21) Anmeldenummer: 99118817.8
(22) Anmeldetag: 23.09.1999
(51) Int. Cl.: B29C 47/88, B29B 9/06, B29C 47/34

(54) **Abkühlvorrichtung für Kunststoffgranulieranlagen**

(30) Priorität: 15.10.1998 DE 19847664
(71) Anmelder: C.F. SCHEER & CIE. GMBH & CO., D-70435 Stuttgart (DE)
(72) Erfinder: Kreuz, Ulrich, 71729 Erdmannhausen (DE); Forgash, Anthony R., Bay City MI 48706 (US)
(74) Vertreter: Klunker . Schmitt-Nilson . Hirsch

(57) **Zusammenfassung**

Es wird eine Kunststoffstranggranuliervorrichtung vorgeschlagen, bei der die gesamte Abkühlvorrichtung 2, mit der die aus einem Extruder austretenden Kunststoffstränge einem Granulator 5 zugeführt werden, verlagerbar ist, indem sie auf Schwingen 7,9 oder auf Schlitten gelagert ist. Auf diese Weise ist es möglich, die gesamte Abkühlvorrichtung aus einer Betriebsposition (Fig. 1), in der ein erstes Ende der Abkühlvorrichtung 2 so unterhalb der Düsen angeordnet ist, daß die aus den Düsen austretenden Kunststoffstränge KS von der Abkühlvorrichtung 2 aufgefangen und zum Granulator 5 geführt werden, in eine Anfahrposition, in der die aus den Düsen austretenden Kunststoffstränge von der Abkühlvorrichtung nicht erfaßt werden, zu bewegen. Andererseits ist es möglich, die Abkühlvorrichtung 2 aus der Betriebsposition in eine Außerbetriebsposition zu verlagern, in der die Abkühlvorrichtung 2 von dem Granulator 5 entfernt angeordnet ist, so daß sich der auf Rollen 10 gelagerte Granulator 5 problemlos austauschen läßt.

Vorteilhaft an dieser Erfindung ist, daß der Raum zwischen den Extruderaustrittsdüsen und der Abkühlvorrichtung 2 von wesentlichen Bauelementen befreit wurde und diese Bauelemente durch konstruktiv einfache, wartungsarme und leicht zugängliche Bauteile ersetzt wurden. Insgesamt ergeben sich wegen der reduzierten Anzahl von Bauteilen geringere Produktionskosten.

## Beschreibung

Die vorliegende Erfindung betrifft eine Abkühlvorrichtung für Kunststoffstranggranulieranlagen zum Abkühlen von schmelzflüssig aus Düsen austretenden Kunststoffsträngen, umfassend ein erstes Ende zum Auffangen der Kunststoffstränge, eine an das erste Ende anschließende, longitudinale Kühlstrecke zum Abkühlen der Kunststoffstränge, und ein an die Kühlstrecke anschließendes zweites Ende zum Weiterleiten der abgekühlten Kunststoffstränge an eine nachfolgende Bearbeitungsstation, z.B. direkt in einen Granulator.

Abwärts geneigte, wasserbespülte Rinnen haben sich insbesondere als Abkühlvorrichtung durchgesetzt. Die vorliegende Erfindung ist aber nicht auf solche Abkühlvorrichtungen beschränkt, sondern ist genauso anwendbar mit den früher häufig verwendeten wasserbespülten, umlaufenden Bändern, mit denen die Kunststoffstränge dem Granulator zugeführt wurden. Zwischen dem Granulator und der Abkühlvorrichtung können Bearbeitungsstationen, wie z.B. eine Temperierstrecke oder eine Entwässerungsstrecke angeordnet sein.

Problematisch bei der Kunststoffstranggranulierung ist seit jeher der Übergang von einer Anfahrposition in eine Betriebsposition. Denn die schmelzflüssig aus den Düsen austretenden Kunststoffstränge können während einer Anlaufphase, insbesondere wenn eine neue Charge extrudiert wird, nicht gleich dem Granulator zugeführt werden. Erst wenn die Stränge der neuen Charge hinreichend homogen sind, läßt sich qualitativ hochwertiges Kunststoffgranulat herstellen. Die aus den Düsen austretenden Stränge werden nach der Anlaufphase abgetrennt und die nachfolgenden, nunmehr homogenen Kunststoffstränge werden aufgefangen, gekühlt und dem Granulator zugeführt. Der Moment des Übergangs zwischen der Anlaufphase und der Betriebsphase ist kritisch.

Zur Zeit sind auf dem Markt zwei Systeme üblich. Gemäß dem ersten System werden die Kunststoffstränge während der Anlaufphase von einem über der Abkühlvorrichtung angeordneten, wasserbespülten Leitblech aufgefangen und abgeleitet (ableitende Schurre). Dieses ableitende Leitblech wird anschließend vorzugsweise querverschoben, wobei gleichzeitig die aus den Düsen austretenden Kunststoffstränge durchtrennt werden. Die nachfolgenden Kunststoffstränge fallen dann auf die Abkühlvorrichtung (umlaufende Bänder oder eine abwärts geneigte Rinne), die die Stränge dann dem Granulator zuleitet. Gemäß dem zweiten System fallen die Kunststoffstränge während der Anlaufphase an der Abkühlvorrichtung vorbei. Sobald die Homogenität der Stränge erreicht ist, wird ein wasserbespültes Leitblech so verschoben, daß die Kunststoffstränge von dem Leitblech erfaßt und der Abkühlvorrichtung zugeleitet werden (zuleitende Schurre). Auch bei diesem System werden die aus den Düsen austretenden Kunststoffstränge gleichzeitig mit der Verschiebung des Leitblechs mittels einem Trennmesser abgetrennt. Das erste System ist zum Beispiel aus der DE-AS 22 30 187 bekannt, während das zweite System in der DE 32 05 052 C2 bzw. EP 0 086 400 B1 beschrieben ist.

Problematisch ist bei beiden Systemen, daß im Bereich der Düsen viele bewegte und unbewegte Teile angebracht sind. Neben den verschieblichen Leitblechen (ableitende bzw. einleitende Schurre) sind dort die dazu notwendigen Schlittenführungen angeordnet. Außerdem sind die Leitbleche wasserbespült, was entsprechende Vorrichtungen erfordert, die mitbewegt werden müssen. Die Schlittenführungen müssen dazu entsprechend stabil und somit voluminös ausgelegt werden. Zusätzlich ist in diesem Bereich das Trennmesser angeordnet, das ggf. eine separate Führungseinrichtung aufweist. Da häufig Störungen im Bereich der Düsen auftreten, zum Beispiel im Falle verklebender Stränge etc., sind diese Vorrichtungen bei der Schadensbehebung oft hinderlich. Aber auch die Vorrichtungen selbst, insbesondere die Schlittenführungen, können störanfällig sein und sind aufgrund der zahlreichen Vorrichtungselemente in diesem engen räumlichen Bereich nicht einfach zugänglich. Schließlich sind diese Vorrichtungselemente bereits bei der Herstellung der Gesamtvorrichtung ein nicht zu unterschätzender Kostenfaktor.

Aufgabe der vorliegenden Erfindung ist es daher, eine zuverlässige und wartungsfreundliche, sowie preisgünstige konstruktive Lösung anzubieten, um die Kunststoffstranggranuliervorrichtung von einer Anfahrposition in eine Betriebsposition und umgekehrt zu versetzen.

Die erfindungsgemäße Lösung ist in Anspruch 1 angegeben. Die Unteransprüche definieren vorteilhafte Ausgestaltungen.

Der Kern der Erfindung ist darin zu sehen, daß auf die verschieblichen Leitbleche im extrudernahen Bereich der Abkühlvorrichtung und auf die entsprechenden Schlittenführungen verzichtet wird und daß stattdessen die gesamte Abkühlvorrichtung zwischen einer Betriebs- und einer Anfahrposition verlagert wird. Die Abkühlvorrichtung kann auf Schwingen gelagert sein und durch entsprechende Bewegung der Schwingen zwischen einer Anfahrposition und einer Betriebsposition verlagert werden. Die Abkühlvorrichtung wird dazu vorzugsweise so auf den Schwingen gelagert, daß sie sich in der Nähe des labilen Gleichgewichtes befindet. Dadurch wird gewährleistet, daß die Abkühlvorrichtung trotzt ihres enormen Gewichts z.B. mittels einem einfachen Verstellkolben ohne großen Kraftaufwand verlagerbar ist.

Alternativ kann die gesamte Rinne auf Schlittenführungen gelagert sein und durch entsprechende Bewegung der Schlitten zwischen der Anfahrposition und der Betriebsposition verlagert werden. Zur Verlagerung dient ebenfalls ein einfacher Verstellkolben.

Durch diese erfindungsgemäße Lösung wird der Bereich um die Austrittsdüsen des Extruders sehr gut zugänglich. Es verbleiben dort lediglich die Wasserzuführung und das Trennmesser. Die Schurre mit ihren Führungselementen entfällt. Dadurch wird die Gesamtvorrichtung entsprechend preisgünstiger in ihrer Herstellung. Die schwingengelagerte Konstruktion ist besonders zuverlässig, da das einzige anfällige Bauteil der Verstellkolben ist, der sich an einer frei zugänglichen Stelle der Vorrichtung befindet.

Während die Abkühlvorrichtung in der Betriebsposition so angeordnet ist, daß die Kunststoffstränge von der Abkühlvorrichtung aufgefangen und weitergeleitet werden, werden die Kunststoffstränge während der Anfahrposition nicht von der Abkühlvorrichtung erfaßt, sondern fallen an ihr vorbei. Dieser Erfolg kann grundsätzlich durch eine Verlagerung der Abkühlvorrichtung quer oder längs zu ihrer Längsausdehnung herbeigeführt werden. Jedoch wird eine Verlagerung längs der longitudinalen Ausdehnung der Abkühlvorrichtung bevorzugt, da es in diesem Falle zusätzlich möglich ist, die Abkühlvorrichtung aus der Anfahrposition über die Betriebsposition hinaus bis in eine "Außerbetriebsposition" zu bewegen, in der sich das granulatorseitige Ende der Abkühlvorrichtung von dem Granulator entfernt befindet, so daß dieser problemlos ausgewechselt werden kann. Der Granulator ist dazu verschieblich gestaltet, zum Beispiel auf Rollen oder Schienen gelagert.

Die Abkühlvorrichtung kann in ihrer Gesamtheit ebenfalls z.B. auf Rollen stehen, um sie leichter austauschen zu können.

Es versteht sich, daß eine Abkühlvorrichtung, die längs zu ihrer longitudinalen Ausdehnung verlagerbar ist, in der Anfahrposition bis in den Granulator hineinreichen kann und bei ihrer Verlagerung in die Betriebsposition zumindest noch bis zum Granulator reicht, um eine Zuführung der Stränge zum Granulator zu gewähren. Im Falle einer Schwingenkonstruktion, bei der alle Schwingen vertikal angeordnet sind, ergibt sich eine nahezu horizontale Verlagerung der Abkühlvorrichtung, wenn die Schwingen um einen kleinen Winkel bewegt werden. Aufgrund der Dimensionen solcher Abkühlvorrichtungen und der in Betracht kommenden Längen der Schwingen ist die sich bei der Verlagerung der Abkühlvorrichtung einstellende Höhendifferenz vernachlässigbar, so daß von einer horizontalen Verlagerung gesprochen werden kann.

Aus Lärmschutzgründen kann die Abkühlvorrichtung als geschlossene Rinne ausgeführt sein, wobei die Kunststoffstränge in das offene, obere Ende der Rinne eintreten und durch das offene, untere Ende der Rinne dem Granulator zugeführt werden. Nachdem die Rinne erfindungsgemäß in ihrer Gesamtheit verlagen wird, ist es vorteilhaft, an ihrem unteren, granulatorseitigen Ende z.B. einen Faltenbalg vorzusehen, der die Rinne gegenüber dem Granulator bzw. der nächstfolgenden Bearbeitungsstation in jeder der Positionen schalldämpfend abdichtet.

Um den Bereich zwischen den Extruderaustrittsdüsen und dem kunststoffstrangauffangseitigen Ende der Abkühlvorrichtung frei zugänglich zu halten, ist das Trennmesser gemäß einer ersten bevorzugten Ausführungsform von der Rinne zwar konstruktiv getrennt, wird aber mit der Verlagerung der Rinne synchronisiert. Das Trennmesser kann zum Beispiel am Extruderkopf verschieblich befestigt werden. Vorzugsweise ist das Trennmesser quer zur Längserstreckung der Abkühlvorrichtung verschieblich gelagert, so daß die Stränge einer nach dem anderen abgetrennt werden. Dadurch wird verhindert, daß die freien Strangenden alle gleichzeitig auf die Messerwalze des Granulators auftreffen. Um diesem an sich bekannten Verfahren mit der erfindungsgemäßen Vorrichtung Rechnung zu tragen, ist es vorteilhaft, wenn die kunststoffstrangauffangseitige Stirnseite der Abkühlvorrichtung entsprechend der quergerichteten Trennmesserbewegung schräg zur longitudinalen Ausdehnungsrichtung der Abkühlvorrichtung verläuft. Dann ist bei synchronisierter Bewegung von Trennmesser und Abkühlvorrichtung das Auffangen der nacheinander auftreffenden Kunststoffstränge mittels der schräg ausgelegten Stirnseite problemlos möglich.

Dasselbe Problem kann aber auch dadurch gelöst werden, daß anstelle nur eines Trennmessers zwei voneinander beabstandete Trennmesser vorgesehen sind, die vorzugsweise an gegenüberliegenden Seiten eines Auffangbehälters angeordnet sind. Der Übergang von der Anfahrposition in die Betriebsposition erfolgt dann derart, daß am Ende der Anlaufphase der Auffangbehälter unter die Düsen geschoben wird, wobei die Kunststoffstränge abgetrennt und nachfolgende Stränge von dem Behälter aufgefangen werden. Anschließend wird die Abkühlvorrichtung in ihre Betriebsposition verlagen wird, und sodann wird der Auffangbehälter mit dem nachfolgenden zweiten Trennmesser weiter verschoben, oder aber es ist nur ein Trennmesser vorgesehen und der Auffangbehälter wird lediglich in seine Ausgangsstellung zurückbewegt. Diese Vorgänge können ggf. auch kontinuierlich vor sich gehen. Bei dieser Variante kann die Stirnseite der Abkühlvorrichtung statt schräg auch quer verlaufen.

In einer weiteren Ausgestaltung der Erfindung kann das Trennmesser an dem auffangseitigen Ende der Abkühlvorrichtung angebracht und mit diesem mitbewegt wird. Um sicherzustellen, daß die Kunststoffstränge einer nach dem anderen abgetrennt werden, ist das Trennmesser schräg ausgerichtet (entsprechend der schräg verlaufenden Stirnseite der Abkühlvorrichtung). Somit wird gewährleistet, daß alle Vorrichtungselemente allein durch Verlagerung der Abkühlvorrichtung bewegt werden. Dadurch werden die Herstellungskosten weiter minimiert und die Gesamtvorrichtung ist zuverlässig und wartungsfreundlich.

Soweit die gewählte Trennmesseranordnung es zuläßt, ist es vorteilhaft, wenn das kunststoffstrangauffangseitige Ende der Rinne in der Anfahrposition gegenüber der endgültigen Betriebsposition abgesenkt ist, um das Zeitintervall zwischen dem Durchtrennen des Stranges an der Düse und dem Auftreffen des Stranges auf das Rinnenende zu vergrößern, damit die Rinne problemlos unter die Düse geschoben werden kann. Erst wenn die Stränge beim Anfahrvorgang von der Rinne aufgefangen worden sind (Betriebsposition), wird das kunststoffstrangauffangseitige Ende in die endgültige Betriebsposition angehoben.

Nachfolgend wird die Erfindung anhand der in den Figuren 1 bis 5 dargestellten Ausführungsform beispielhaft beschrieben. In den Figuren zeigen:
Fig. 1 eine schematische Seitenansicht der erfindungsgemäßen Kunststoffstranggranuliervorrichtung,
Fig. 2 eine Draufsicht (schematisch) auf das kunststoffstrangauffangseitige Ende der Abkühlvorrichtung mit schräg verlaufender Stirnkante,
Fig. 3 eine Schnittansicht gemäß Fig. 2 entlang Linie III-III mit einem an der Abkühlvorrichtung angeordneten, schräg verlaufenden Trennmesser,
Fig. 4 zeigt eine auf Schlittenführungen verschieblich gelagerte Abkühlvorrichtung in einer Betriebsposition, und
Fig. 5 zeigt die Abkühlvorrichtung aus Fig. 4 in einer Anfahrposition.

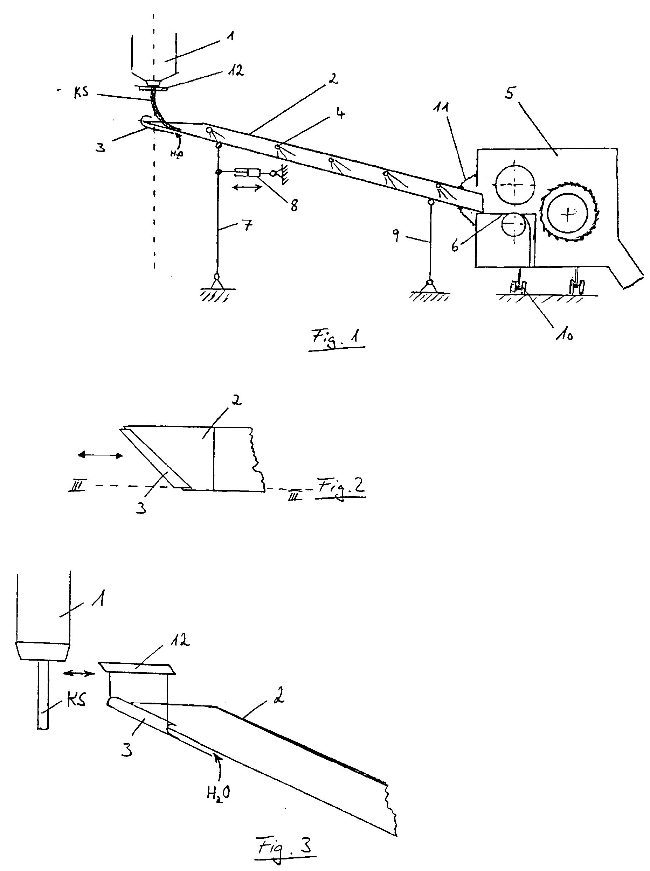

In Fig. 1 ist eine auf Schwingen gelagerte Ausführungsform der erfindungsgemäßen Kunststoffstranggranuliervorrichtung schematisch dargestellt. Danach werden die aus einem Extruder 1 austretenden Kunststoffstränge KS von einer Abkühlvorrichtung 2, die hier als Rinne ausgebildet ist, einem Granulator 5 zugeführt. Die Rinne 2 ist wasserbespült, einerseits mittels einer Wasserzuführvorrichtung 3 am extruderseitigen Ende der Rinne 2 und andererseits mittels Sprühdüsen 4. Die Rinne ist auf Schwingen 7 und 9 gelagert, wobei die längere der beiden Schwingen 7 von einem an ihrem oberen Ende angreifenden und in Pfeilrichtung verstellbaren Kolben 8 um ihren unteren Anlenkpunkt bewegt werden kann. Die beiden Schwingen 7 und 9 stehen senkrecht, so daß sich die Abkühlvorrichtung in einem labilen Gleichgewicht befindet. Die durch den Verstellkolben erzeugte Verlagerung der Rinne in annähernd horizontaler Richtung beträgt nur etwa 10 cm, so daß Höhenänderungen, die bei der Verlagerung der Rinne auftreten, vernachlässigbar sind.

Tatsächlich sind die Schwingen aus Stabilitätsgründen wesentlich kürzer als in Fig. 1 schematisch dargestellt. Der Effekt der im wesentlichen horizontalen Verlagerung wird dadurch jedoch nicht merklich beeinflußt, da die horizontale Verlagerung gering ist.

Die Kunststoffstranggranuliervorrichtung ist in Fig. 1 in einer "Betriebsposition" dargestellt. Durch Verlagerung der Rinne 2 nach rechts zum Granulator 5, kann die "Anfahrposition" erreicht werden, in der die aus den Düsen austretenden Kunststoffstränge KS an dem oberen Ende der Rinne 2 vorbeifallen. Der Granulator 5 ist dementsprechend im Bereich seiner Einführungsöffnung für eine horizontale Verlagerung der Rinne 2 mit einem horizontalen Leitblech 6 ausgestattet. Ein Faltenbalg 11 stellt sicher, daß die Rinne 2, die vorzugsweise rundherum geschlossen ist, dicht mit dem Granulatorgehäuse (oder einer anderen Einrichtung zur Weiterbehandlung der abgekühlten Stränge) abschließt. Der Faltenbalg 11 dient der Geräuschvermeidung.

Andererseits ist die Rinne 2 in entgegengesetzte Richtung aus der dargestellten Betriebsposition heraus in eine "Außerbetriebsposition" verlagerbar, in der sich das granulatorseitige Ende der Rinne 2 nicht mehr im Granulator 5 befindet. Der Granulator 5, der auf Rollen 10 steht, kann dann einfach ausgetauscht werden. Auch die Abkühlvorrichtung 2 kann in ihrer Gesamtheit auf Rollen 25 gelagen sein, wie z.B. bei der in Fig. 4 und 5 dargestellten Ausführungsform gezeigt.

Das Trennmesser 12 bzw. die Trennmessereinrichtung ist ebenfalls nur schematisch dargestellt, da deren Anbringung allgemein bekannt ist. Das Trennmesser 12 wird bei der in Fig. 1 dargestellten ersten Ausführungsform quer zur Rinne 2 verschoben, so daß die Kunststoffstränge KS nacheinander abgetrennt werden. Wenn das extruderseitige Ende der Rinne 2, wie in Fig. 2 schematisch in Draufsicht dargestellt, eine schräg verlaufende Stirnseite aufweist, ist es möglich, die Kunststoffstränge KS mittels dem Trennmesser 12 mit einer kontinuierlichen Bewegung abzutrennen, während gleichzeitig die Rinne 2 aus der Anfahrposition in die Betriebsposition verlagert wird.

Nicht dargestellt ist die eingangs erwähnte Alternative zur Lösung dieses durch die erfindungsgemäße Vorrichtung entstandenden Problems, daß ein quer verfahrbares Trennmesser 1 mit einer längsverfahrbaren Rinne synchronisiert werden muß. Statt einer schräg verlaufenden Stirnseite des extrudernahen Endes der Abkühlvorrichtung 2, kann die Stirnseite auch - wie allgemein bekannt - quer verlaufen, wobei aber das querverschiebliche Trennmesser 12 durch einen Auffangbehälter mit einem oder jeweils einem Trennmesser am stirnseitigen Ende des Auffangbehälters ersetzt wird. Die entsprechende Funktionsweise wurde eingangs erläutert.

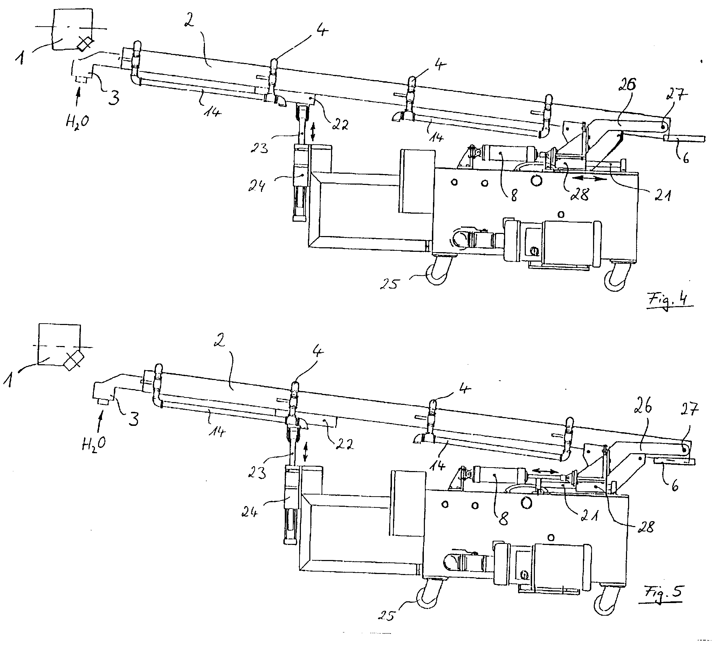

Schließlich zeigt Fig. 3 schematisch eine Weiterbildung der in Fig. 2 dargestellten, schräg auslaufenden Rinne 2. Gemäß dieser Ausführungsform nach Fig. 3 ist das Trennmesser 12 an der Rinne befestigt und schräg zur Verlagerungsrichtung der Rinne 2 ausgerichtet, entsprechend dem schräg auslaufenden Rinnenende. Durch Verlagerung der Rinne 2 aus der dargestellten Anfahrposition nach links in eine Betriebsposition werden die Kunststoffstränge KS einer nach dem anderen abgetrennt und die nachfolgenden Kunststoffstränge treffen in entsprechender Reihenfolge auf das entsprechend schräg auslaufende Ende der mitbewegten Rinne 2, während die abgetrennten Stränge noch vor der herannahenden Rinne 2 herabfallen. Die Befestigung des Trennmessers 12 ist nur schematisch dargestellt und kann beliebig, insbesondere federnd ausgeführt sein.

In den Figuren 4 und 5 ist eine weitere Ausführungsform der erfindungsgemäßen Abkühlvorrichtung 2 dargestellt. Solche Elemente der Abkühlvorrichtung, die mit der zuvor beschriebenen Ausführungsform prinzipiell übereinstimmen, sind mit denselben Bezugsziffern bezeichnet.

In Figur 4 ist die Abkühlvorrichtung in einer Betriebsposition dargestellt, wobei das kunststoffstrangauffangseitige, erste Ende einer Rinne 2 unter einem Extruder 1 angeordnet ist, so daß die aus dem Extruder austretenden, schmelzflüssigen Kunststoffstränge von diesem ersten Ende aufgefangen werden können. Sprühdüsen 4 sind über Rohrleitungen 14 an einen nicht dargestellten Wasseranschluß angeschlossen, an den außerdem die Wasserzuführvorrichtung 3 des kunststoffstrangauffangseitigen, ersten Endes der Rinne 2 angeschlossen wird. Die Rinne 2 wird in der Nähe des ersten, auffangseitigen Endes der Rinne 2 durch eine Stütze 23 gestützt. Die Stütze 23 ist in ihrer vertikalen Position in Pfeilrichtung höhenverstellbar. Dazu ist sie in Linearführungen 24 gelagert. Die Rinne 2 liegt lose auf der Stütze 23 auf, wobei sich an der Unterseite der Rinne 2 eine Führungsbahn 22 befindet, die auf der Stütze 23 bzw. auf einer an dem oberen Ende der Stütze 23 angeordneten Rolle abläuft. Nach Art einer Kurvenscheibe kann diese Führungsbahn 22 so gestaltet sein, daß eine Verlagerung der Rinne 2 in horizontaler Richtung in eine definierte Verlagerung in vertikaler Richtung umgesetzt wird. Andererseits kann die Führungsbahn 22 so gestaltet sein, daß eine vertikale Verlagerung des kunststoffstrangauffangseitigen Endes bei einer horizontalen Verschiebung der Rinne 2 gerade vermieden wird.

Die Verlagerung der Rinne 2 in horizontaler Richtung erfolgt mittels dem Verstellzylinder 8, der horizontal an einen horizontal verschieblichen Schlitten 28 angreift. Der Schlitten 28 ist wiederum auf einer Schlittenführung 21 montiert und entlang dieser Schlittenführung 21 horizontal verschieblich. An dem Schlitten 28 ist eine starre Schwinge 26 befestigt, die mit ihrem freien Ende an dem unteren, zweiten Ende der Rinne 2 angelenkt ist. Die Rinne 2 ist mit der starren Schwinge 26 über ein Gelenk 27 drehbar verbunden. Diese Konstruktion stellt sicher, daß das untere Ende der Rinne 2 parallel entlang dem in diesem Fall horizontal ausgebildeten Leitblech 6 bewegt wird, wenn der Schlitten 28 mittels dem Verstellzylinder 8 verschoben wird. Erreicht wird das dadurch, daß die Schlittenführung 21 parallel zu dem Führungsblech 6 ausgerichtet ist.

Da das untere, zweite Ende der Rinne 2 horizontal zwangsgeführt wird und die Rinne 2 lediglich auf der Stütze 23 aufliegt, führt eine horizontale Verschiebung der Rinne 2 zu einer vertikalen Bewegung des ersten, kunststoffstrangauffangseitigen Endes der Rinne 2. Wie zuvor erläutert, kann diese vertikale Bewegung durch geeignete Ausbildung der Führungsbahn 22 verstärkt, ausgeglichen oder sogar umgekehrt werden. Es ist jedoch vorteilhaft, wenn bei der Bewegung der Rinne 2 von der Betriebslage (Figur 4) in die Anfahrposition, wie in Figur 5 dargestellt, das extrudernahe Ende der Rinne 2 abgesenkt wird, da dadurch der zwischen dem Extruder und dem extrudernahen Ende der Rinne 2 ein vergrößerter Freiraum geschaffen wird. Der vergrößerte Freiraum erlaubt für den Anfahrvorgang von der Anfahrposition in die Betriebsposition eine vergleichsweise große, zwischen dem Abtrennen der Stränge und dem Auftreffen der freien Strangenden auf das obere Rinnenende liegende Zeitspanne. Durch Höhenverstellung der Stütze 23 (Fig. 5) bzw. Schwinge 7 (Fig. 1) kann das kunststoffstrangauffangseitige Rinnenende anschließend in die endgültige Betriebsposition verlagert werden.

Vorteilhafterweise ist die Rinne 2 mit allen Anbauteilen und Verlagerungseinrichtungen auf Rollen 25 gelagert, damit die Abkühlvorrichtung als Gesamtheit schnell austauschbar ist.

Selbstverständlich sind die Trennmesserkonstruktion und die Faltenbalgkonstruktion, sowie alle anderen Einrichtungen, die im Grunde unabhängig von der Ausgestaltung der Abkühlvorrichtung sind, in entsprechender Weise auf die in den Figuren 4 und 5 dargestellte Ausführungsform der Erfindung anwendbar. Es liegt auch im Rahmen der Erfindung, daß statt eines Schlittens mehrere Schlitten und/oder statt eines Verstellkolbens mehrere Verstellkolben vorgesehen sind. Die Höheneinstellung der Stütze 23 kann von Hand erfolgen, kann aber auch durch entsprechende Einrichtungen automatisch erfolgen.

## Patentansprüche

1. Abkühlvorrichtung (2) für Kunststoffgranulieranlagen zum Abkühlen von schmelzflüssig aus Düsen austretenden Kunststoffsträngen (KS), umfassend
- ein erstes Ende zum Auffangen der Kunststoffstränge (KS),
- eine an das erste Ende anschließende, longitudinale Kühlstrecke zum Abkühlen der Kunststoffstränge (KS), und
- ein an die Kühlstrecke anschließendes zweites Ende zum Weiterleiten der abgekühlten Kunststoffstränge (KS) an eine nachfolgende Bearbeitungsstation (5),
**dadurch gekennzeichnet**, daß die Abkühlvorrichtung (2) verlagerbar ist zwischen
- einer ersten Position, der Betriebsposition (Fig. 1 + 4), in der das erste Ende zum Auffangen und das zweite Ende zum Weiterleiten der Kunststoffstränge positioniert sind, und
- einer zweiten Position, der Anfahrposition (Fig. 5), in der das erste Ende von der Auffangposition entfernt angeordnet ist.

2. Abkühlvorrichtung nach Anspruch 1, **dadurch gekennzeichnet,** daß die Abkühlvorrichtung auf Schwingen (7,9) gelagert ist.

3. Abkühlvorrichtung nach Anspruch 1 oder 2, **dadurch gekennzeichnet,** daß die Schwingen (7,9) annähernd vertikal stehen.

4. Abkühlvorrichtung nach Anspruch 2 oder 3, **dadurch gekennzeichnet,** daß die Abkühlvorrichtung so gelagert ist, daß sie in den verschiedenen Positionen nahe dem oder im labilen Gleichgewichtszustand ist.

5. Abkühlvorrichtung nach einem der voranstehenden Ansprüche, **dadurch gekennzeichnet,** daß an mindestens einer Schwinge (7) mindestens ein Verstellkolben (8) angreift.

6. Abkühlvorrichtung nach Anspruch 5, **dadurch gekennzeichnet,** daß der Verstellkolben (8) an dem der Abkühlvorrichtung nähergelegenen Ende der längsten Schwinge (7) senkrecht zur Schwinge angreift.

7. Abkühlvorrichtung nach Anspruch 1, **dadurch gekennzeichnet**, daß die Abkühlvorrichtung auf mindestens einem Schlitten (28) verschieblich gelagert ist.

8. Abkühlvorrichtung nach Anspruch 7, **dadurch gekennzeichnet**, daß eine Stütze (23) zur Einstellung eines Neigungswinkels der Abkühlvorrichtung vorgesehen ist.

9. Abkühlvorrichtung nach Anspruch 8, **dadurch gekennzeichnet,** daß mit der Stütze (23) eine Führungsbahn (22) so gekoppelt ist, daß eine Verlagerung der Abkühlvorrichtung in horizontaler Richtung zu einer Verlagerung zumindest eines der beiden Enden der Abkühlvorrichtung in vertikaler Richtung führt.

10. Abkühlvorrichtung nach einem der Ansprüche 7 bis 9, **dadurch gekennzeichnet,** daß an dem mindestens einen Schlitten (28) ein Verstellkolben (8) angreift.

11. Abkühlvorrichtung nach einem der voranstehenden Ansprüche, **dadurch gekennzeichnet,** daß das erste Ende höhenverstellbar ist.

12. Abkühlvorrichtung nach einem der voranstehenden Ansprüche, **dadurch gekennzeichnet,** daß die Abkühlvorrichtung in eine dritte Position verlagerbar ist, eine Außerbetriebsposition, in der die Abkühlvorrichtung entfernt von der nachfolgenden Bearbeitungsstation (5) angeordnet ist.

13. Abkühlvorrichtung nach einem der voranstehenden Ansprüche, **dadurch gekennzeichnet,** daß die Abkühlvorrichtung eine weitgehend rundherum geschlossene Rinne aufweist, die an ihrem granulatorseitigen Ende eine flexible Dichtvorrichtung (11), z.B. einen Faltenbalg, besitzt, die im Betriebszustand die Rinne zu der nachfolgenden Bearbeitungsstation (5) abdichtet.

14. Abkühlvorrichtung nach einem der voranstehenden Ansprüche, **dadurch gekennzeichnet,** daß mindestens ein Trennmesser (12) vorgesehen ist, mit dem die aus den Düsen austretenden Kunststoffstränge (KS) der Reihe nach durchtrennt werden, wobei die Trennmesserbewegung und die Verlagerung der Abkühlvorrichtung von der Anfahrposition in die Betriebsposition zeitlich derart koordiniert sind, daß die herabfallenden abgeschnittenen Stränge (KS) nicht von der verlagerten Abkühlvorrichtung erfaßt werden.

15. Abkühlvorrichtung nach Anspruch 14, **dadurch gekennzeichnet,** daß die Stirnseite des ersten Endes der Abkühlvorrichtung schräg zur longitudinalen Ausdehnungsrichtung der Abkühlvorrichtung verläuft.

16. Abkühlvorrichtung nach Anspruch 15 oder 16, **dadurch gekennzeichnet,** daß zwei beabstandete Trennmesser an gegenüberliegenden Seiten eines mit der Abkühlvorrichtung koordinierten Auffangbehälters angeordnet sind.

17. Abkühlvorrichtung nach Anspruch 15 oder 16, **dadurch gekennzeichnet**, daß das Trennmesser 12 an der Abkühlvorrichtung befestigt ist und schräg zu ihrer Verlagerungsrichtung ausgerichtet ist.
